# EUROPÄISCHE PATENTSCHRIFT

(11) **EP 1 601 437 B1**
(45) Veröffentlichungstag und Bekanntmachung des Hinweises auf die Patenterteilung: **24.03.2010**
(21) Anmeldenummer: 04715240.0
(22) Anmeldetag: 27.02.2004
(51) Int. Cl.: B01D 17/04

(54) **VERFAHREN ZUR AUFBEREITUNG VON ÖL-WASSER-EMULSIONEN**
METHOD FOR PREPARING OIL/WATER EMULSIONS
PROCEDE DE PREPARATION D'EMULSIONS HUILE/EAU

(30) Priorität: 14.03.2003 DE 10311289
(43) Veröffentlichungstag der Anmeldung: 07.12.2005
(73) Patentinhaber: Hammer, Ernst Ekkehard, 45481 Mülheim an der Ruhr (DE)
(72) Erfinder: KARETH, Sabine, 58455 Witten (DE); PETERMANN, Marcus, 58455 Witten (DE); WEIDNER, Eckhard, 44795 Bochum (DE); HAMMER, Ernst, Ekkehard, 45481 Mülheim an der Ruhr (DE); ALEX, Michael, 44801 Bochum (DE)
(74) Vertreter: Vomberg, Friedhelm
(86) Internationale Anmeldenummer: PCT/DE2004/000367
(87) Internationale Veröffentlichungsnummer: WO 2004/080567

(56) Entgegenhaltungen:
- DE-A- 4 035 433
- DE-A- 4 333 318
- US-A- 5 100 546

## Beschreibung

Die Erfindung betrifft ein Verfahren zur Aufbereitung von Öl-Wasser-Gemischen und Emulsionen mittels eines Spaltstoffes zur Trennung in eine ölhaltige und eine wasserhaltige Phase unter erhöhten Temperaturen und erhöhtem Druck.

Ein derartiges Verfahren wird in der DE 43 33 318 A1 beschrieben, wobei als Spaltmittel Kohlendioxid verwendet wird, das durch Verbrennung als Rauchgasbestandteil gewonnen wird, wobei die Rauchgaswärme zur direkten Beheizung des Emulsionsspaltbehälters eingesetzt wird. Vorzugsweise soll eine zweistufige Emulsionsspalteinrichtung verwendet werden, wobei die Trennung in der ersten Stufe unter Überdruck und in der zweiten Stufe unter Umgebungsdruck durchgeführt werden soll. Die aus dem Emulsionsspaltbehälter austretende wasserhaltige Phase wird zunächst einer Strippkolonne zugeführt, welche indirekt mittels Rauchgaswärme beheizbar ist. Das Ausstrippen erfolgt mittels Wasserdampf und/oder mittels ein- oder mehrstufiger Destillationskolonnen. Nachteilig bei diesem Verfahren ist die Art der Energieaufbringung, die eine Verbrennungsanlage voraussetzt, aus deren Abgas das für die Öl-Wasser-Trennung benötigte CO₂ entnommen werden muss.

In der DE 40 39 255 A1 wird ein Verfahren zur Spaltung von Kühlschmiermitteln mittels Anwendung von Kohlendioxid unter Druck bei erhöhten Temperaturen beschrieben, wobei von der Erkenntnis ausgegangen wird, dass durch die Anhebung der Säurestärke der partiell entstehenden Kohlensäure durch erhöhten Druck bis auf einen pH-Wert von 3,3 bei erhöhter Temperatur eine chemische Reaktivität erreicht wird, die durch Umwandlung der anionischen Tenside in ihre konjugierten Säuren die emulgierende Wirkung der Tenside aufhebt und damit die Emulsion zum Brechen bringt. Erfindungsgemäß soll die unter einem Druck von 4x10⁵ Pa bis 10⁶ Pa stehende Emulsion mit Ultraschallwellen behandelt werden.

In dem in der DE 197 54 756 C1 beschriebenen Verfahren wird zur Emulsionsspaltung die ölhaltige wässrige Emulsion für eine bestimmte Zeit auf einen erhöhten Druck und eine erhöhte Temperatur gebracht, mit Kohlendioxid versetzt und anschließend entspannt, worauf die so vorgeklärte, an Öl verarmte Emulsion in einem Abscheider aufgetrennt wird und dann die daraus resultierende wässrige Fraktion durch Ultrafiltration in ein Retentat und Wasser gespalten wird, wobei die Spaltung in einem Autoklaven durchgeführt wird und durch schockartige Druckentspannung ein nach oben gerichteter Gasblasenstrom aus Kohlendioxid erzeugt werden soll, durch den eine ölreiche Phase abgetrennt wird. Während des Verfahrens wird die ölhaltige wässrige Emulsion auf einen Druck von bis zu 80x10⁵ Pa und auf Temperaturen zwischen 20 bis 60°C gebracht, um in einer Haltezeit zwischen 5 und 20 min die Emulsionstrennung herbeizuführen.

Ebenfalls mit Kohlendioxid als Spaltmittel arbeitet das in der DE 199 26 577 A1 beschriebene Verfahren.

Es ist Aufgabe der vorliegenden Erfindung ein neues Verfahren zu schaffen, mit dem die Trennung in praktisch reine Öl- und Wasser-Phasen auf apparativ einfache und kostengünstige Weise möglich ist.

Diese Aufgabe wird durch ein Verfahren nach Anspruch 1 gelöst, bei dem als Spaltstoff eine leicht flüchtige, flüssige Kohlenwasserstoffverbindung, vorzugsweise aliphatischer Kohlenwasserstoff verwendet wird. Dieser Kohlenwasserstoff, gegebenenfalls auch eine Kohlenwasserstoff-Mischung wird mit der aufzubereitenden Öl-Wasser-Emulsion vermischt, wonach das erhaltene Gemisch unter einem Druck zwischen 1,0x10⁶ PA und 4,5x10⁶ Pa vorzugsweise zwischen 3,5x10⁶ Pa und 4,0x10⁶ Pa auf Temperaturen bis maximal130°C, vorzugsweise 30°C und 80°C erwärmt und einem Absetzbehälter zugeführt wird. Die zu wählende Temperatur hängt von der Zusammensetzung der Öl-Wasser-Emulsion und dem Spaltstoff ab und liegt bei einem Wert zwischen 20°C (Raumtemperatur) und 130°C.In kurzer Zeit trennen sich die wasserhaltige erste Phase und eine leichtere zweite Phase aus Öl und dem leicht flüchtigen Kohlenwasserstoff. Die zweite Phase wird durch Druckentspannung und Temperaturerhöhung in eine flüssige und eine gasförmige Phase getrennt, wobei die flüssige Phase die Ölmenge aus der aufzubereitenden Öl-Wasser-Emulsion und die Gasphase das Spaltmittel enthält. Die erhaltene abgetrennte wässrige Phase weist lediglich Rest-Ölgehalte von 150 bis 250 ppm auf, die ölhaltige Phase Rest-Wassergehalte von 100 bis 150 ppm, d. h. es werden praktisch reine Phasen erhalten. Vorteilhafter Weise kann der als Spaltmittel verwendete Kohlenwasserstoff wieder verwendet werden, was vorzugsweise dazu ausgenutzt wird, dass der von der ölhaltigen Phase abgetrennte gasförmige Kohlenwasserstoff zur Trennung von weiteren Öl-Wasser-Emulsionen wieder verwendet werden kann, insbesondere rezyklierend in einem geschlossenen Verfahrenskreislauf.

Nach einer weiteren Ausgestaltung der Erfindung wird die Kondensationswärme des Spaltstoffes durch Mischung mit der Emulsion oder dem Öl-Wasser-Gemisch direkt zu deren bzw. dessen Erwärmung benutzt. Das erfindungsgemäße Verfahren ist sowohl auf Öl-in-Wasser-Emulsionen als auch auf Wasser-in-Öl-Emulsionen anwendbar. Ferner ist das erfindungsgemäße Verfahren auch zur Aufbereitung solcher Öl-Wasser-Gemische anwendbar, die zusätzlich zur Stabilisierung der Emulsionen Emulgatoren enthalten. Die in dem Öl-Wasser-Gemisch enthaltenen Öl-Komponenten können mineralische, synthetische, vegetabile und/oder tierische Öle oder Fette enthalten.

Bei Anwendung des erfindungsgemäßen Verfahrens trennen sich in kurzer Zeit die wasserhaltige erste Phase und eine leichtere zweite Phase aus Öl und dem leicht flüchtigen Kohlenwasserstoff, wobei die Phasentrennzeiten vorzugsweise zwischen 1 sek. und 15 min., insbesondere zwischen 30 sek. und 5 min. gewählt werden sollen.

Bevorzugt wird dieses Verfahren auch auf solche Öl-Wasser-Emulsionen angewendet, die einen hohen Anteil an Feststoffpartikeln aufweisen. Durch die Zugabe von Kohlenwasserstoffen, die im Vergleich zu den nach dem Stand der Technik bekannten Verfahren geringe Druckerhöhung auf 3,5 bis 4,5x10⁶ Pa und die Temperaturerhöhung wird die Viskosität erniedrigt bzw. die Fluidität erhöht, so dass die Festkörperpartikel im Absetzbehälter absinken und mit der wässrigen Phase eine filtrationsfähige Suspension bilden.

Vorzugsweise wird die Trennung der zweiten, Öl und Kohlenwasserstoffe enthaltenden Phase in einem Zyklon (Fliehkraftabscheider) durchgeführt, aus dem die gasförmigen Kohlenwasserstoffe über einen Gasabzug entnommen und, wie bereits erwähnt, wieder in den Prozess bzw. zu einer neuen Öl-Wasser-Gemischtrennung eingesetzt werden können.

Um die Energiebilanz des erfindungsgemäßen Verfahrens zu optimieren, wird nach einer Weiterentwicklung der Erfindung der Wärmegehalt der aus dem Absetzbehälter abgezogenen ersten wasserhaltigen Phase und/oder der Wärmegehalt der gewonnenen ölhaltigen Phase mittels eines oder jeweils eines, vorzugsweise im Gegenstrom betriebenen Wärmetauschers zur Erwärmung der komprimierten Öl-Wasser-Emulsion verwendet. Hierbei wird vorzugsweise der Wärmegehalt des Wassers in einem von der Öl-Wasser-Emulsion zuerst durchlaufenen Wärmetauschers auf die Emulsion übertragen, die anschließend einen zweiten Wärmetauscher durchläuft, in dem der Wärmegehalt der ölhaltigen Phase zur weiteren Erwärmung der Emulsion ausgenutzt wird.

Nach der vorbeschriebenen Erwärmung wird nach einer Weiterbildung der Erfindung die mit den Kohlenwasserstoffen versetzte Emulsion nochmals gemischt und, falls erforderlich, mittels einer weiteren Wärmequelle auf eine Temperatur bis zu maximal 130°C, vorzugsweise bis zu 80°C eingestellt, bevor das Gemisch aus Öl, Wasser und den Kohlenwasserstoffen dem Absetzbehälter zugeführt wird.

Bevorzugt beträgt die Menge der Kohlenwasserstoffe, die der Öl-Wasser-Emulsion beigegeben werden, 5% bis 200%, vorzugsweise 10% bis 100% der Menge der zu trennenden Öl-Wasser-Emulsion. Als bevorzugt verwendete Kohlenwasserstoffe werden Propan und/oder Butan verwendet, prinzipiell kommen jedoch auch andere aliphatische Kohlenwasserstoffe mit 1 bis 10 C-Atomen, Olefine (mit 2 bis 4 C-Atomen) oder auch halogenhaltige Kohlenwasserstoffe in Betracht.

Schließlich kann zur weiteren Reinigung der aus dem Absetzbehälter abgezogenen wasserhaltigen Phase, die gegebenenfalls durch Filtration von Feststoffen befreit ist, eine Ultrafiltration angewendet werden. Als abschließende Behandlung der abgezogenen ölhaltigen Phase, die gegebenenfalls noch Chlor-, Schwefel- und polyzyklische aromatische Kohlenwasserstoff (PAK)-Anteile enthält, kann eine Extraktionsbehandlung, beispielsweise in einer ionischen Flüssigkeit, und/oder einer Sorptionsbehandlung (z. B. Absorption, Adsorption, Desorption durch Strippung) und/oder eine chemische Behandlung z. B. durch Hydrierung oder partielle Oxidation vorgenommen werden.

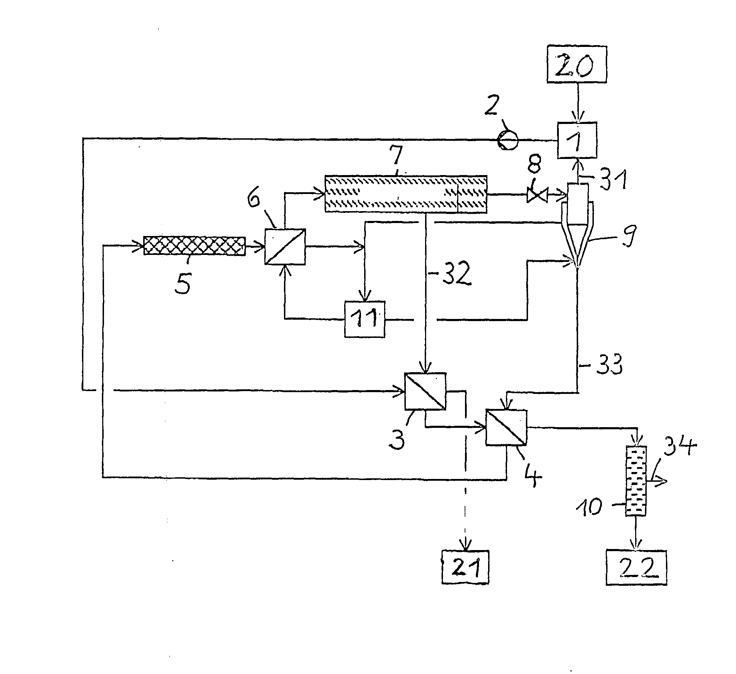

Die besonderen Vorteile des vorbeschriebenen Verfahrens bestehen insbesondere darin, dass die Spaltstoffe nicht verloren gehen, somit in einem geschlossenen Kreislauf gearbeitet werden kann, dass relativ geringe Drücke zur Emulsionsspaltung aufgewendet werden müssen, dass die aufzuwendende Energie gering ist und auf einem für die Emulsionsvorwärmung günstigen Temperaturniveau zurückgewonnen werden kann und dass durch die zeitweise und prozessbedingte Viskositätserniedrigung im Öl gebundene Feststoffe in die Wasserphase absinken und mit dem abgetrennten Wasser (erneut) einer Filtration zugeführt werden können. Der apparative Aufwand ist im Vergleich zu den nach dem Stand der Technik bekannten Verfahren klein; insbesondere kann die für die Durchführung des Verfahrens notwendige Anlage "mobil" gestaltet werden, d. h. dass sie als Teil eines Fahrzeuges zu dem gewünschten Einsatzort verbracht werden kann. Weitere Vorteile der Erfindung sowie sonstige Ausgestaltungen werden anhand der Zeichnung erläutert, die ein schematisches Flussdiagramm mit verwendeten Anlagenteilen zeigt.

Aus dem Oberlauf einer Gas-Flüssigkeitstrenneinrichtung, nämlich ein Zyklon 9, gelangt gasförmiger Kohlenwasserstoff (siehe Pfeil 31) in eine Mischkammer 1, in der sich der Kohlenwasserstoff direkt mit der Öl-Wasser-Emulsion aus dem Vorratsbehälter 20 vermischt. Unter Wärmeabgabe an das vorzuwärmende Öl-Wasser-Gemisch, gegebenenfalls ergänzt durch gekühlte Wärmeübertragungsflächen, kondensiert der Kohlenwasserstoff-Gasstrom. Die Öl-Wasser-Emulsion und der verflüssigte Kohlenwasserstoff werden mittels einer Umwälzpumpe 2 über Wärmetauscher 3 und 4 einem statischen Mischer 5, einem weiteren Wärmetauscher 6 und schließlich einem Absetzbehälter 7 zugeführt. In den Wärmetauschern 3 und 4 nimmt das durchlaufende Stoffgemisch aus der Öl-Wasser-Emulsion und den Kohlenwasserstoffen Wärme von dem Wasser auf, das (siehe Pfeil 32) im Gegenstrom zu der Mischung aus der Öl-Wasser-Emulsion und den Kohlenwasserstoffen den Wärmetauscher 3 durchläuft, bevor das gegebenenfalls mit Feststoffen beladene Wasser einem Behälter 21 und gegebenenfalls einer Filtration zugeführt wird. In entsprechender Weise wird das gewonnene und dem Zyklon 9 entnommene Öl (siehe Pfeil 33) durch den Wärmetauscher 4 im Gegenstrom geleitet, bevor dieses Öl einer Nachbehandlung, z. B. in einer Extraktionsanlage 10 zugeführt wird, bevor es nach Abtrennung von Chlor-, Schwefel- und PAK-Anteilen (siehe Pfeil 34) einem Behälter 22 zugeführt wird.

Eine Wärmequelle 11 sorgt dafür, dass die nochmals in dem statischen Mischer 5 intensiv durchmischte Flüssigkeit auf die notwendige Temperatur, die zwischen der Raumtemperatur und 130°C liegt, gebracht wird. Dieselbe Wärmequelle kann gegebenenfalls zur Temperatursteuerung der im Zyklon 9 behandelten Stoffmengen verwendet werden.

Nach der vorbeschriebenen Durchmischung und der mehrstufigen Aufheizung hat sich die Viskosität der Kohlenwasserstoffe sowie der Ölfraktion in Folge der Temperaturerhöhung soweit erniedrigt, dass nicht nur eine kontinuierliche Phase aus de hinzugegebenen Kohlenwasserstoff, insbesondere flüssigem Propan und dem vollständigen Öl-Anteil des Öl-Wasser-Gemisches im Absetzbehälter aufschwimmt, sondern dass auch die zunächst in der Emulsion in Schwebe gehaltenen Feinstpartikel absinken, wo sie zusammen mit der wässrigen Phase (siehe Pfeil 32) abgezogen werden können. Die zweite, aus Öl und dem leicht siedenden flüssigen Kohlenwasserstoff, z. B. Propan, bestehende Phase wird unter Überleitung über ein Entspannungsventil 8 dem Zyklon 9 zugeführt, dessen Druck- und Temperaturbedingungen ggf. unter Verwendung eines weiteren Wärmetauschers so eingestellt werden dass ein Verdampfen des leicht flüchtigen Kohlenwasserstoffes bewirkt wird, während das Öl den Zyklon 9 als Flüssigphase im Unterlauf (siehe Pfeil 33) verlässt. Nach Durchlauf des Wärmetauschers 4 wird die ölhaltige Phase einem mit einer ionischen Flüssigkeit gefüllten Behälter 10 zugeführt, um dort mittels eines Extraktionsschrittes chlor-, schwefel- und PAK-haltige Substanzen an die ionische Flüssigkeit abzugeben. Die von Zeit zu Zeit erforderliche Regeneration der ionischen Flüssigkeit ist nach dem Stand der Technik bekannt und im Einzelnen im vorliegenden Verfahrensschema nicht dargestellt. Falls erforderlich können auch andere physikalische oder chemische Nachreinigungsverfahren, die dem Fachmann bekannt sind, allein oder in Kombination angewendet werden.

Bei gleichzeitiger Kreislaufführung des leicht flüchtigen Kohlenwasserstoffes, z. B. Propan, gelingt es, mittels des erfindungsgemäßen Verfahrens selbst mit Emulgatoren versetzte Öl-Wasser-Gemische oder Emulsionen in ein nahezu wasserfreies Öl einerseits und ein nahezu ölfreies Wasser andererseits zu spalten. Der verwendete Kohlenwasserstoff als Spaltstoff geht im Verfahren nicht verloren, sondern wird im Kreislauf geführt. Die im Verfahren befindliche Wärmemenge wird optimal durch die direkte Kondensation des leicht flüchtigen Kohlenwasserstoffes im aufzuheizende Öl/Wassergemisch und die Verwendung der Wärmetauscher 3 und 4 ausgenutzt.

## Patentansprüche

1. Verfahren zur Aufbereitung von Öl-Wasser-Gemischen und Emulsionen mittels eines Spaltstoffes zur Trennung in eine ölhaltige und eine Wasserhaltige Phase unter erhöhten Temperaturen und erhöhtem Druck,
**dadurch gekennzeichnet,**
**dass** als Spaltstoff leicht flüchtige, flüssige Kohlenwasserstoffverbindungen, vorzugsweise ein aliphatischer Kohlenwasserstoff, mit dem Öl-Wasser-Gemisch oder der Emulsion vermischt und das erhaltene Gemisch unter einem Druck zwischen 1,0x10⁶ Pa und 4,5x10⁶ Pa, vorzugsweise zwischen 3,5x10⁶ Pa und 4,0x10⁶ Pa, auf Temperaturen bis maximal 130°C, vorzugsweise zwischen 30°C und 80°C erwärmt und einem Absetzbehälter (7) zugeführt wird, aus dem die wasserhaltige erste Phase und eine leichtere zweite Phase aus Öl und den leicht flüchtigen Kohlenwasserstoffen abgetrennt werden, wonach die zweite Phase nach bzw. durch Druckentspannung und Temperaturerhöhung in eine ölhaltige und eine gasförmige Phase, die die leicht flüchtigen Kohlenwasserstoffe enthält, getrennt werden.

2. Verfahren nach Anspruch 1, **dadurch gekennzeichnet, dass** von der ölhaltigen Phase abgetrennte gasförmige Kohlenwasserstoffe rezyklierend zur.Trennung von weiteren Öl-Wasser-Gemischen und Emulsionen weiter verwendet werden, vorzugsweise in einem geschlossenen Verfahrenskreislauf und/oder dass die Kondensationswärme des Spaltstoffes durch Mischung mit der Emulsion oder dem Öl-Wasser-Gemisch direkt zu deren/dessen Erwärmung benutzt wird.

3. Verfahren nach einem der Ansprüche 1 oder 2, **dadurch gekennzeichnet, dass** das Öl-Wasser-Gemisch eine Öl-in-Wasser-Emulsion oder eine Wasser-in-Öl-Emulsion ist und/oder dass die Aufbereitung auf Öl-Wasser-Gemische angewendet wird, die zusätzlich zur Stabilisierung der Emulsionen Emulgatoren enthalten, deren Menge vorzugsweise zwischen 0,1 und 10 Gew.% liegt.

4. Verfahren nach einem der Ansprüche 1 bis 3, **dadurch gekennzeichnet, dass** die Ölkomponenten mineralische, synthetische, vegetabile und/oder tierische Öle oder Fette enthalten und/oder dass die Phasentrennung in dem Absetzbehälter (7) in einer Zeit zwischen 1 sek. und 15 min., vorzugsweise zwischen 30 sek. und.5 min. durchgeführt wird.

5. Verfahren nach einem der Ansprüche 1 bis 4, **dadurch gekennzeichnet, dass** das Verfahren auch für Öl-Wasser-Gemische und Emulsionen verwendet wird, die mit feinteiligen Feststoffen beladen bzw. verunreinigt sind, wobei die Feststoffe im Absetzbehälter (7) durch Sedimentation in der Wasserphase ausgeschieden werdenund/oder dass die Trennung der zweiten Öl und Kohlenwasserstoff enthaltenden Phase in einem Zyklon (9) (Fliehkraftabscheider) durchgeführt wird.

6. Verfahren nach einem der Ansprüche 1 bis 5, **dadurch gekennzeichnet, dass** der Wärmegehalt der aus dem Absetzbehälter (7) abgezogenen ersten wasserhaltigen Phase und/oder der Wärmegehalt der gewonnenen ölhaltigen Phase mittels eines oder jeweils eines, vorzugsweise im Gegenstrom betriebenen Wärmetauschers (3, 4) zur Erwärmung der komprimierten Öl-Wasser-Gemische oder Emulsion verwendet werden.

7. Verfahren nach einem der Ansprüche 1 bis 6, **dadurch gekennzeichnet, dass** das Öl-Wasser-Gemisch oder die Emulsion und der hinzugefügte Kohlenwasserstoff nach der ersten Erwärmung nochmals gemischt und gegebenenfalls unter Hinzufügung weiterer nicht aus dem Prozess stammender Wärme auf die gewünschte Temperatur von bis zu 130°C erwärmt werden.

8. Verfahren nach einem der Ansprüche 1 bis 7, **dadurch gekennzeichnet, dass** die Menge der hinzugegebenen Kohlenwasserstoffe zwischen 5% und 200%, vorzugsweise 10% bis 100% der Menge der zu trennenden Öl-Wasser-Emulsion beträgt.

9. Verfahren nach einem der Ansprüche 1 bis 8, **dadurch gekennzeichnet, dass** die als Spaltstoff hinzugefügten Kohlenwasserstoffe, aliphatische Kohlenwasserstoffe mit 1 bis 10 C-Atomen, vorzugsweise Propan und/oder Butan, olefinische Kohlenwasserstoffe mit 2 bis 4 C-Atomen oder halogenhaltige, insbesondere chlor- oder fluorhaltige Kohlenwasserstoffe mit 1 bis 4 C-Atomen sind.

10. Verfahren nach einem der Ansprüche 1 bis 9, **dadurch gekennzeichnet, dass** die aus dem Absetzbehälter (7) abgezogene wasserhaltige Phase abschließend einer Ultrafiltration unterzogen wird und/oder dass die abgezogene ölhaltige Phase einer abschließenden Extraktionsbehandlung, vorzugsweise in einer ionischen Flüssigkeit, zur Entfernung noch enthaltener Chlor-, Schwefel- und PAK-haltiger Substanzen unterzogen wird.

## Claims

1. Method for preparing oil-water mixtures and emulsions under elevated temperatures and pressure by means of a separating material for the separation into an oil-containing and a water containing phase,
**charaterised in that,**
as a separating material highly volatile, liquid hydrocarbon compounds, preferably an aliphatic hydrocarbon, are mixed with the oil-water-mixture or the emulsion and that the obtained mixture under a pressure between 1,0 x 10⁶ Pa and 4,5 x 10⁶Pa, preferably between 3,5 x 10⁶Pa and 4,0 x 10⁶Pa, is heated to a maximum temperature of 130°C, preferably between 30°C and 80°C, and is subsequently fed to a setting vessel (7) out of which the first phase containing water and a lighter second phase consisting of oil and of the highly volatile hydrocarbons are separated, after which the second phase is separated in an oil-containing and in a gaseous phase containing the highly volatile hydrocarbons after or by pressure relief.

2. Method according to claim 1, **characterised in that** the gaseous hydrocarbons separated from the oil-containing phase are used by recycling for the separation of further oil-water-mixtures and emulsions, preferably in a closed process cycle and/or that the heat of condensation of the separating material is used directly for warning the emulsion or the oil-water-mixture by mixing.

3. Method according to one of the claims 1 or 2, **characterised in that** the oil-water-mixture is an oil-in-water-emulsion or a water-in-oil-emulsion and/or that the preparation is applied to oil-water-mixtures which contain additionally emulsifiers for stabilisation of the emulations, said emulsifier-amount lies preferably between 0,1 and 10 weight%.

4. Method according to one of the claims 1 to 3, **characterised in that** the oil components contain mineral, synthetic, vegetable and/or animal oils or fat and/or that the phase-separation is effected in the setting vessel (7) during a time between 1 sec. and 15 min, preferably between 30 sec and 5 min.

5. Method according to one of the claims 1 to 4, **characterised in that** the method is also used for oil-water-mixtures and emulsions, which are charged or contaminated with fine solid particles, whereby the solid materials are separated by sedimentation in the water phase and/or that the separation of the second oil- and hydrocarbon containing phase is executed in a cyclone (9) (centrifugal force separator).

6. Method according to one of the claims 1 to 5, **characterised in that** the heat content of the first aqueous phase drawn off from the setting vessel (7) and/or the heat content of the obtained oil containing phase is used for the heating of the compressed oil-water-mixtures or emulsions by means of a or in each case one heat exchanger (3, 4), preferably one counter flow heat exchanger.

7. Method according to one of the claims 1 to 6, **characterised in that** the oil-water-mixture or the emulsion and the added hydrocarbon is mixed again after the first heating and if necessary is heated up to the desired temperature of up to 130°C by adding further heat not derived from the process.

8. Method according to one of the claims 1 to 7, **characterised in that** the amount of the added hydrocarbons is between 5% and 200%, preferable 10% to 100% of the mass of the oil-water-emulsion which must be separated.

9. Method according to one of the claims 1 to 8, **characterised in that** the hydrocarbons added as separating material are aliphatic hydrocarbons with 1 to 10 C-atoms, preferably propane and/or butane, olefinic hydrocarbons with 2 to 4 C-atoms or halogen chlorine or fluorine containing hydrocarbons with 1 to 4 C-atoms.

10. Method according to one of the claims 1 to 9, **characterised in that** the water containing phase drawn off from the setting vessel (7) is subjected finally to an ultrafiltration and/or that the drawn off oil containing phase is subjected to a final extraction treatment, preferably in an ionic fluid, for separating chlorine-, sulpur- and polycyclic aromatic hydrocarbon containing substances.

## Revendications

1. Procédé de préparation de mélanges huile/eau et d'émulsions, à des températures et pression élevées, au moyen d'une matière de séparation pour réaliser une séparation en une phase huileuse et en une phase aqueuse, **caractérisé par le fait que**, en tant que matière de séparation, des composés d'hydrocarbure liquide hautement volatiles, de préférence un hydrocarbure aliphatique, sont mélangés avec le mélange huile/eau ou avec l'émulsion et que le mélange obtenu est chauffé, sous une pression comprise entre 1,0 x 10⁶ Pa et 4,5 x 10⁶ Pa, de préférence entre 3,5 x 10⁶ Pa et 4,0 x 10⁶ Pa, à des températures allant jusqu'à 130 °C au maximum, de préférence comprises entre 30 °C et 80 °C, et est amené à un réservoir de sédimentation (7) dans lequel sont séparées la première phase aqueuse et une deuxième phase plus légère se composant d'huile et des hydrocarbures hautement volatiles, ce après quoi ladite deuxième phase est séparée, après ou bien par une détente de pression et une augmentation de température, en une phase huileuse et en une phase gazeuse contenant les hydrocarbures hautement volatiles.

2. Procédé selon la revendication 1, **caractérisé par le fait que** les hydrocarbures gazeux séparés de la phase huileuse sont réutilisés par recyclage pour la séparation d'autres mélanges huile-eau et émulsions, de préférence dans un cycle fermé de processus, et/ou que la chaleur de condensation de la matière de séparation est utilisée directement, par son mélange avec l'émulsion ou le mélange huile/eau, pour chauffer celle-ci/celui-ci.

3. Procédé selon l'une quelconque des revendications 1 ou 2, **caractérisé par le fait que** le mélange huile/eau est une émulsion huile dans l'eau ou une émulsion eau dans l'huile et/ou que la préparation est appliquée à des mélanges huile/eau qui, en plus de la stabilisation des émulsions, contiennent des agents émulsifiants dont la quantité est comprise de préférence entre 0,1 et 10 % en poids.

4. Procédé selon l'une quelconque des revendications 1 à 3, **caractérisé par le fait que** les composants huileux contiennent des huiles ou graisses minérales, synthétiques, végétales et/ou animales et/ou que la durée de la séparation des phases mise en oeuvre dans le réservoir de sédimentation (7) est comprise entre 1 seconde et 15 minutes, de préférence entre 30 secondes et 5 minutes.

5. Procédé selon l'une quelconque des revendications 1 à 4, **caractérisé par le fait que** le procédé est mis en oeuvre également pour des mélanges huile/eau et émulsions qui sont chargés ou bien contaminés de fines matières solides, les matières solides étant éliminées, dans le réservoir de sédimentation (7), par sédimentation dans la phase aqueuse et/ou que la séparation de la deuxième phase contenant l'huile et l'hydrocarbure est réalisée dans un cyclone (9) (séparateur centrifuge).

6. Procédé selon l'une quelconque des revendications 1 à 5, **caractérisé par le fait que** la teneur en chaleur de la première phase aqueuse évacuée du réservoir de sédimentation (7) et/ou la teneur en chaleur de la phase huileuse obtenue sont utilisées pour chauffer les mélanges comprimés huile/eau ou l'émulsion comprimée, au moyen d'un ou au moyen de respectivement un échangeur de chaleur (3, 4) de préférence à contre-courant.

7. Procédé selon l'une quelconque des revendications 1 à 6, **caractérisé par le fait que** le mélange huile/eau ou l'émulsion et l'hydrocarbure ajouté sont mélangés une nouvelle fois après le premier échauffement et sont portés à la température souhaitée allant jusqu'à 130 °C, le cas échéant en ajoutant de la chaleur supplémentaire ne provenant pas du processus.

8. Procédé selon l'une quelconque des revendications 1 à 7, **caractérisé par le fait que** la quantité des hydrocarbures ajoutés est comprise entre 5 % et 200 %, de préférence entre 10 % et 100 % de la quantité de l'émulsion huile/eau à séparer.

9. Procédé selon l'une quelconque des revendications 1 à 8, **caractérisé par le fait que** les hydrocarbures ajoutés en tant que matière de séparation sont des hydrocarbures aliphatiques ayant 1 à 10 atomes de carbone, de préférence du propane et/ou du butane, des hydrocarbures oléfiniques ayant 2 à 4 atomes de carbone ou des hydrocarbures halogénés, en particulier chlorés ou fluorés ayant 1 à 4 atomes de carbone.

10. Procédé selon l'une quelconque des revendications 1 à 9, **caractérisé par le fait que** la phase aqueuse évacuée du réservoir de sédimentation (7) est soumise finalement à une ultrafiltration et/ou que la phase huileuse évacuée est soumise à un traitement final d'extraction, de préférence dans un liquide ionique, pour éliminer des substances contenant du chlore, du soufre et des HAP, qui sont encore présentes.
